# EUROPÄISCHE PATENTANMELDUNG

(11) **EP 2 139 223 A2**
(43) Veröffentlichungstag der Anmeldung: **30.12.2009**
(21) Anmeldenummer: 09163811.4
(22) Anmeldetag: 25.06.2009
(51) Int. Cl.: H04N 3/15, H04N 5/232

(54) **Verfahren zur Bilddatenaufnahme bei der Beobachtung von Himmelskörpern durch satellitengestützte Instrumente**

(30) Priorität: 27.06.2008 DE 102008030727
(71) Anmelder: Jena-Optronik GmbH, 07745 Jena (DE)
(72) Erfinder: Fritsch, Holger, 07749, Jena (DE); Voß, Burkart, 07778, Dorndorf-Steudnitz (DE)
(74) Vertreter: Freitag, Joachim

(57) **Zusammenfassung**

Die Erfindung betrifft ein Verfahren zur Aufnahme mehrerer verschienener oder gleichartiger optischer Kanäle von satellitengestützten Instrumenten bei der Beobachtung von Himmelskörpern.

Die Aufgabe, eine neue Möglichkeit zur Aufnahme mehrerer verschienener oder gleichartiger optischer Kanäle von satellitengestützten Instrumenten bei der Beobachtung von Himmelskörpern zu finden, die einen hohen Grad der Übereinstimmung der Modulationsübertragungsfunktion der optischen Kanäle (Co-Registrierung) ohne digitale Bildnachbearbeitung gestattet, wird erfindungsgemäß gelöst, indem Abbildungsverzerrungen infolge der Oberflächenkrümmung, der Rotationsbewegung des Himmelskörpers und/oder der Flugbewegung des beobachtenden Instruments bereits im Prozess der Bildaufnahme minimiert werden.

Dabei können sowohl statische Effekte infolge der Erdkrümmung als auch dynamische Effekte infolge der Rotation des Himmelskörpers sowie der Flugbewegung des Instruments besonders flexibel durch dynamisch angepasstes Zusammenfassen von hinreichend kleinen Sensorelementen zu unterschiedlichen effektiven Pixeln (sog. Binning) für die Co-Registrierung in einem Schritt minimiert werden.

## Beschreibung

Die Erfindung betrifft ein Verfahren zur Bilddatenaufnahme bei der Beobachtung von Himmelskörpern durch satellitengestützte Instrumente, bei dem ein Bildsensor eine Vielzahl von Bildpunkten aus einem zweidimensionalen Abtastbereiches beim Überfliegen der Oberfläche des Himmelskörpers aufnimmt und durch wiederholte Abtastung derselben Objektpixel, die durch die Flugbewegung sukzessive auf verschiedenen Sensorelementen zu liegen kommen, eine Bildanalyse nach Überlagerung unterschiedlicher Pixeldaten für gleiche von der Oberfläche des Himmelskörpers aufgenommene Objektpixel ermöglicht. Das Verfahren ist insbesondere für den Einsatz in sogenannten Pushbroom-Scannern konzipiert, bietet sich jedoch auch für die Anwendung bei Whiskbroom-Scannern an.

Viele Aufgaben der Fernerkundung von Himmelskörpern lassen sich nur lösen, indem ein- und dasselbe Objektpixel in mehreren Spektralkanälen und gegebenenfalls bei unterschiedlicher Polarisationsrichtung aufgenommen wird. Dabei ist es essenziell wichtig, dass die in unterschiedlichen Wellenlängen und gegebenenfalls bei unterschiedlicher Polarisationsrichtung aufgenommenen Pixel vor der weiteren Verarbeitung exakt übereinander gelegt werden. Ziel ist es also, die Punkt-Verwaschungs-Funktionen (PSF - Point Spread Functions) der einzelnen Aufnahmen zu einem möglichst großen Prozentsatz zur Deckung zu bringen. Die Überlagerung wird als Co-Registrierung bezeichnet, die eine bestimmte Güte der Überdeckung der PSFs von einzelnen Aufnahmen ein- und desselben Zielbereiches aufweisen muss.

Werden die einzelnen aufzunehmenden Wellenlängen bzw. gegebenenfalls unterschiedlichen Polarisationsrichtungen nicht über Strahlteiler oder dispersive Elemente spektral getrennt, sondern durch einzelne direkt den Detektoren (z.B. Sensorelementen eines Sensorarrays) vorgelagerte Filter, so erfolgen die Aufnahmen ein- und desselben Objektpixels zeitlich versetzt. Dadurch führen Bildaufnahmen in verschiedenen optischen Kanälen (z.B. mit unterschiedlichen Wellenlängen oder Polarisationsrichtungen) zu Aufnahmen unter verschiedenen Blickwinkeln, die räumlich überlagert werden müssen.
Durch unterschiedliche Blickwinkel treten bei der Beobachtung von Himmelskörpern Verzerrungseffekte auf. Diese Verzerrungseffekte sind bei Pushbroom- und Whiskbroom-Scannern unterschiedlicher Natur und Ausprägung, wie z.B. von Floyd F. SABINS in: Remote Sensing: Principles and Interpretations. W. H. Freeman, 1996 beschrieben. Die Verzerrungseffekte führen bei konstanter Größe der Sensorelemente in der Sensorebene zu unterschiedlich großen Objektpixeln, die bei der Projektion von der Oberfläche des Himmelskörpers erfasst werden, und damit zu unterschiedlichen PSFs.
Bereits durch die unterschiedliche Größe der PSFs ergibt sich zwangsläufig eine schlechte Co-Registrierung der einzelnen zu überlagernden Aufnahmen. Diese Unterschiede der PSFs erzeugen eine Missregistrierung, die mit der Größe des Abtastfeldes des Sensorarrays ansteigt.

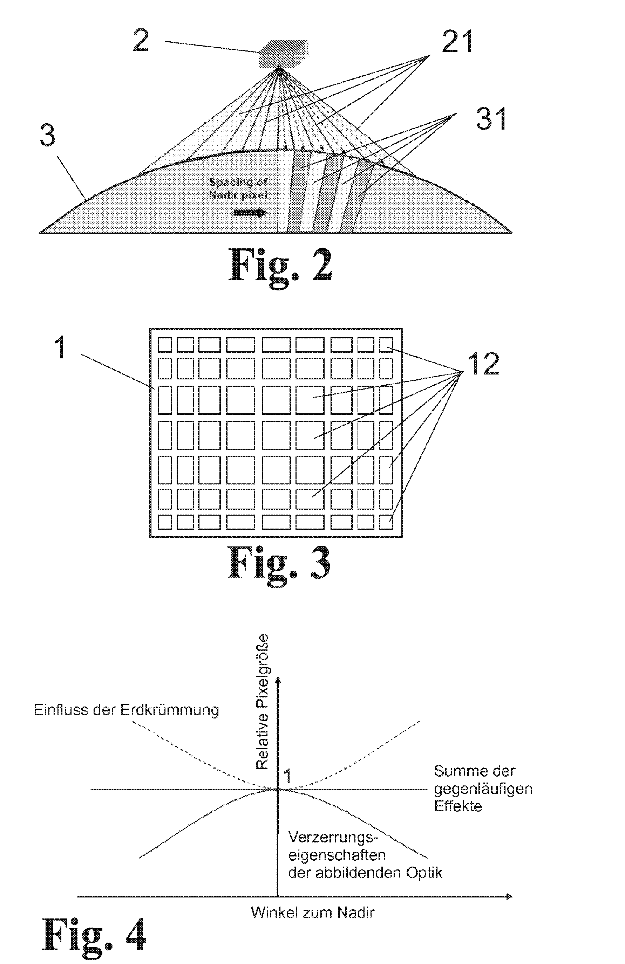

Erfolgt die Bildaufnahme in äquidistanten Zeitschritten, ergibt sich durch die Aufsummierung der vergrößerten Pixel zum Rand des Gesichtsfeldes des Abtastbereiches des Sensorarrys hin zusätzlich eine zunehmende Verschiebung der Zentralpunkte der PSFs. Dadurch verschlechtert sich die Qualität der Co-Registrierung infolge der verschieden großen Aufnahmen ein und desselben Objektpixels. Dieser Effekt ist schematisch in Fig. 2 am Beispiel der gekrümmten Erdoberfläche und des Abtastfeldes eines Sensorarrays innerhalb eines Erdbeobachtungsinstrumentes mit Pushbroom-Scanner (in Flugrichtung) skizziert.
Aufgrund der beschriebenen Verzerrungseffekte werden die Objektpixel zum Rand des Gesichtsfeldes des optischen Instruments hin größer. Das ist ein bislang übliches Phänomen bei Erdbeobachtungsinstrumenten mit großer Abtastweite quer und/oder längs zur Flugrichtung (Schadweite), wie von F.F. SABINS (a.a.O) festgestellt.

Unabhängig davon gibt es als weiteren Grund für eine schlechte Co-Registrierung die relative Bewegung zwischen Bildsensormatrix und Zielbereich der Abtastung während der Gesamtzeit der mehrkanaligen Bildaufnahme aufgrund der Erdrotation. Diese zusätzliche Relativbewegung kann durch äquidistantes Abtasten nicht ausgeglichen werden. Sie ist abhängig vom gewählten Orbit sowie von der Position des Beobachtungsinstrumentes auf dem Orbit und somit in der Regel zeitlich variabel.

Einen ähnlich negativen Effekt hat bei Pushbroom-Scannern eine fehlerhafte Ausrichtung der Sensormatrix, bei der die Spalten nicht parallel zur Satellitenbewegung (Flugrichtung) sind. Bei Wiskbroom-Scannern trifft dies auf eine fehlerhafte Ausrichtung der durch rotatorischen Scanbewegung erzeugten Zeilen zu. Diese Fehlausrichtungen führen wiederum zu einer Relativbewegung zwischen den einzelnen Sensorelementen, die nicht durch äquidistantes Abtasten ausgeglichen werden kann.

Um die Aufnahmeprobleme (Probleme der Co-Registrierung) zu umgehen, ist im Stand der Technik eine digitale Bildnachbearbeitung vor der Co-Registrierung zum Beispiel durch sogenanntes Resampling (siehe z.B. A. THEILER et al.: "Automated Coregistration of MTI Spectral Bands", Proc. SPIE 4725, (2002) oder E. GALBRAITH et al.: "Resampling methods for the MTI coregistration product", Proceedings of SPIE Vol. 5093) bekannt geworden. Ferner sind die Verwendung von Wiener-Filtern (Y. YITZHAKY, et al.: "Direct method for restoration of motion-blurred images", J. Opt. Soc. Am. A, Vol. 15, No. 6, June 1998) oder die Anwendung der Newton-Raphson-Methode (J. MATAS et al., "Learning Efficient Linear Predictors for Motion Estimation", Proceedings of 5th Indian Conference on Computer Vision, Graphics and Image Processing Madurai, India, 2006, Springer-Verlag, pp. 445-456, ISBN: 978-3-540-68301-8) bekannt geworden. Diese Techniken verbessern jedoch nur unzureichend die Qualität der dann co-registrierten Abbildung.

Der Erfindung liegt die Aufgabe zugrunde, eine neue Möglichkeit zur Bilddatenaufnahme bei der Beobachtung von Himmelskörpern durch satellitengestützte Instrumente für eine Bildanalyse nach Überlagerung der sukzessive von der Oberfläche des Himmelskörpers aufgenommene Objektpixel zu finden, die einen hohen Grad der Übereinstimmung der Co-Registrierung der Aufnahmen von gleichen, mittels unterschiedlicher Sensorpixel aufgenommener Objektpixel ohne digitale Bildnachbearbeitung erzielt.

Erfindungsgemäß wird die Aufgabe bei einem Verfahren zur Bilddatenaufnahme bei der Beobachtung von Himmelskörpern durch satellitengestützte Instrumente, bei dem ein Bildsensor eine Vielzahl von Bildpunkten (Objektpixeln) aus einem zweidimensionalen Abtastbereiches beim Überfliegen der Oberfläche des Himmelskörpers aufnimmt und durch wiederholte Abtastung derselben Objektpixel, die durch die Flugbewegung sukzessive auf verschiedenen Sensorelementen zu liegen kommen, eine Bildanalyse nach Überlagerung unterschiedlicher Pixeldaten für gleiche von der Oberfläche des Himmelskörpers aufgenommene Objektpixel ermöglicht, dadurch gelöst, dass Abbildungsverzerrungen infolge der Oberflächenkrümmung, der Rotationsbewegung des Himmelskörpers und/oder der Flugbewegung des beobachtenden Instruments bereits im Prozess der Bildaufnahme minimiert werden.

Vorteilhaft wird eine statische Abbildungsverzerrung aufgrund der gekrümmten Oberfläche des beobachteten Himmelskörpers durch eine von der Mitte zum Randbereich des auf den Bildsensor projizierten Abtastbereiches hin verkleinerte Pixelfläche der Sensorpixel mit radial gestauchter Pixelfläche korrigiert.
Zweckmäßig werden dabei die Bilddaten mittels eines Bildsensors aufgenommen, der von der Mitte zum Randbereich hin abnehmende sensitive Flächengrößen der Sensorelemente aufweist.

Als eine weitere Möglichkeit können die Bilddaten mittels eines hochauflösenden Bildsensors, der gleichgroße sensitive Flächen der Sensorelemente aufweist, derart aufgenommen werden, dass die Sensorelemente zu unterschiedlich großen effektiven Sensorpixeln zusammengefasst werden, wobei zur Erzeugung der effektiven Sensorpixel von der Mitte zum Randbereich des Bildsensors hin weniger Sensorelemente zusammengefasst werden.

Dazu können die effektiven Sensorpixel vorteilhaft als unterschiedlich große Sensorelementbereiche durch hardwaregestütztes Zusammenfassen von benachbarten Sensorelementen gebildet werden, wobei die Korrektur einer statischen Abbildungsverzerrung aufgrund der gekrümmten Oberfläche des beobachteten Himmelskörpers durch Zusammenschaltung der Signalausgänge einer geringeren Anzahl von Sensorelementen im Randbereich des auf den Bildsensor projizierten Abtastbereiches gegenüber der Anzahl von Sensorelementen in der Mitte des Bildsensors zu kleineren effektiven Sensorpixeln mit radial gestauchter Pixelfläche erreicht wird.
Die effektiven Sensorpixel können aber auch als unterschiedlich große Sensorelementbereiche durch softwaregestütztes Zusammenfassen von benachbarten Sensorelementen gebildet werden, wobei die Korrektur einer statischen Abbildungsverzerrung aufgrund der gekrümmten Oberfläche des beobachteten Himmelskörpers durch Zusammenfassen der Signaldaten einer geringeren Anzahl von Sensorelementen im Randbereich des auf den Bildsensor projizierten Abtastbereiches gegenüber der Anzahl von Sensorelementen in der Mitte des Bildsensors zu kleineren effektiven Sensorpixeln mit radial gestauchter Pixelfläche erreicht wird.

Eine statische Abbildungsverzerrung aufgrund der gekrümmten Oberfläche des beobachteten Himmelskörpers kann aber auch einfach durch optische Entzerrung mittels einer Optik mit entgegengesetzt zur Objektfeldkrümmung verzerrter Abbildung korrigiert werden, wobei der Bildsensor gleichgroße metrische Sensorelemente aufweist.

Zusätzlich zu einer auf beliebige Art korrigierten statischen Abbildungsverzerrung erfolgt eine Korrektur von dynamischen Abbildungsverzerrungen aufgrund der Bewegung des Beobachtungsinstruments gegenüber der Oberfläche des um seine Achse rotierenden Himmelskörpers vorzugsweise durch softwaregestütztes zeitlich veränderliches Zusammenfassen von Sensorelementen zu effektiven Sensorpixeln derart, dass die unterschiedlich zusammengefassten Sensorelemente der effektiven Sensorpixel im Laufe der wiederholten Abtastung des auf den Bildsensor projizierten Abtastfeldes dynamisch entsprechend der Abbildungsbewegung in ihrer Position auf dem Bildsensor verschoben werden.
Die zusätzliche Korrektur von dynamischen Abbildungsverzerrungen aufgrund der Bewegung des Beobachtungsinstruments gegenüber der Oberfläche des um seine Achse rotierenden Himmelskörpers kann aber auch hardwaregestützt durch zeitlich veränderliches Zusammenfassen von Sensorelementen zu effektiven Sensorpixeln derart erfolgen, dass die unterschiedlich zusammengefassten Sensorelemente der effektiven Sensorpixel im Laufe der wiederholten Abtastung des auf den Bildsensor projizierten Abtastfeldes dynamisch entsprechend der Abbildungsbewegung in ihrer Position auf dem Bildsensor verschoben werden.

In beiden vorgenannten Fällen werden dynamische Verzerrungseffekte infolge einer der Flugbewegung überlagerten Rotationsbewegung des um seine Achse rotierenden Himmelskörpers durch zeitlich veränderliches Zusammenfassen der effektiven Sensorpixel berücksichtigt werden, wobei das zeitlich veränderliche Zusammenfassen von benachbarten Sensorelementen in Abhängigkeit vom Abstand des Beobachtungsfeldes auf der Oberfläche des Himmelskörpers zur Drehachse desselben erfolgt.
Dynamische Verzerrungseffekte infolge der Flugbewegung des Beobachtungsinstruments über der Oberfläche des Himmelskörpers werden vorteilhaft durch eine zeitlich variable Abtastrate der effektiven Sensorpixel berücksichtigt, wobei die zeitlich veränderliche Abtastrate in Abhängigkeit vom Abstand des Beobachtungsfeldes des Himmelskörpers zur Rotationsachse desselben erfolgt.

Es erweist sich als besonders vorteilhaft, dass sowohl die Korrektur der statischen Abbildungsverzerrung aufgrund der gekrümmten Oberfläche als auch der dynamischen Abbildungsverzerrungen aufgrund der Bewegung des Beobachtungsinstruments gegenüber der Oberfläche des um seine Achse rotierenden Himmelskörpers durch zeitlich veränderliches Zusammenfassen von Sensorelementen zu effektiven Sensorpixeln erfolgen, wobei die unterschiedlich zusammengefassten Sensorelemente der effektiven Sensorpixel im Laufe der wiederholten Abtastung des auf den Bildsensor projizierten Abtastfeldes dynamisch entsprechend der Abbildungsbewegung in ihrer Position auf dem Bildsensor verschoben werden.
Dabei können dynamische Abbildungsverzerrungen aufgrund der Flugbewegung des Beobachtungsinstruments gegenüber der Oberfläche des Himmelskörpers zusätzlich durch eine zeitlich variable Abtastrate der effektiven Sensorpixel berücksichtigt werden, wobei die zeitlich veränderliche Abtastrate in Abhängigkeit vom Abstand des Beobachtungsfeldes des Himmelskörpers zur Drehachse desselben erfolgt.

Die vorstehend beschriebenen Abläufe des erfindungsgemäßen Verfahrens werden vorteilhaft zur Bildaufnahme spektral oder polarisationsoptisch unterschiedlicher optischer Kanäle von satellitengestützten Instrumenten bei der Beobachtung von Himmelskörpern verwendet, wobei der Bildsensor eine Vielzahl von Objektpunkten aus einem zweidimensionalen Abtastfeld der Oberfläche des Himmelskörpers durch wiederholte Abtastung derselben Objektpunkte infolge der Flugbewegung sukzessive mit Sensorelementen von verschiedenen optischen Kanälen aufnimmt und ohne weitere Korrektur eine Überlagerung der Bilddaten unterschiedlicher optischer Kanäle zur mehrkanaligen Bildanalyse ermöglicht.
Die oben beschriebenen Verfahrensschritte können aber auch zweckmäßig zur Bildaufnahme gleichartiger optischer Kanäle von satellitengestützten Instrumenten bei der Beobachtung von Himmelskörpern verwendet werden, wobei der Bildsensor eine Vielzahl von Objektpunkten aus einem zweidimensionalen Abtastfeld der Oberfläche des Himmelskörpers durch wiederholte Abtastung derselben Objektpunkte infolge der Flugbewegung sukzessive mit Sensorelementen von gleichartigen optischen Kanälen aufnimmt und ohne weitere Korrektur eine Überlagerung der Bilddaten zur Bilddatenverbesserung nach dem TDI-Verfahren (Time-Delay-Integration-Verfahren) ermöglicht.

Die grundlegende Idee der Erfindung basiert auf der Überlegung, dass digitale Bildnachbearbeitungen (Georeferenzierung, Resampling, Auflösungsanpassung) die bekannten Abtastfehler zwar teilweise kompensieren kann, jedoch prinzipbedingt gleichzeitig zu Verfälschungen der Bildinformationen führt. Deshalb verfolgt die Erfindung den Weg der Verminderung von Abtastfehlern bereits bei der Bildaufnahme durch den Scanner.
Eine erste Möglichkeit, die oben beschriebenen statischen Effekte der fehlerhaften Abtastung infolge der Erdkrümmung bei der Co-Registrierung zu berücksichtigen, ist die Anpassung der effektiven Größe der Sensorelemente an die statische Abbildungsverzerrung. Das kann zum einen durch unterschiedlich große Sensorelemente als adaptierte Sensorhardware realisiert werden (siehe Fig. 3) oder zum anderen durch softwaregestütztes Zusammenfassen von unterschiedlichen, hinreichend kleinen Sensorelementen. Letztere softwaregestützte Zusammenschaltung von Sensorelementen zu größeren effektiven Sensorpixeln ist z.B. in der Astronomie für Sternaufnahmen unter dem Begriff "Binning" bekannt geworden, um eine Anpassung der Sensorauflösung an die Teleskopauflösung zu erreichen.
Für die vorliegende Erfindung wird davon in neuem Sinne Gebrauch gemacht, indem kleine Sensorelemente als Subpixel zu adaptierten größeren effektiven Sensorpixeln zusammengefasst werden, so dass einheitliche abbildungs- und bewegungskonforme Objektpixel auf der Oberfläche des Himmelskörpers (siehe Fig. 2) auch bei unterschiedlichen Blickwinkeln entstehen. Damit werden die PSFs örtlich oder zeitlich auseinanderliegender Objektpixel bereits bei der Abtastung in Übereinstimmung gebracht. (direkte Co-Registrierung). Eine fehlerhafte Ausrichtung der Sensormatrix kann somit durch entsprechende Berücksichtigung der Pixelgrößen und -lagen durch adaptives Binning ausgeglichen werden.
Eine zweite Möglichkeit, die oben beschriebenen Fehlereffekte bei der Co-Registrierung zu korrigieren, sind Anpassungen der Optik dergestalt, dass eine verzerrt abbildende Optik in Abhängigkeit vom Blickwinkel gerade die Verzerrung aufgrund des Abtastprinzips und der Form des Himmelskörpers unter demselben Blickwinkel aufhebt. Dies ist besonders vorteilhaft bei Pushbroom-Scannern, da sich hier durch Anpassung einer alleinigen und feststehenden Optik das gesamte Gesichtsfeld des Sensorarrays erfindungsgemäß korrigieren lässt (siehe Fig. 4). Im Ergebnis einer solchen Korrektur ergibt sich ein Bild mit konstanter Pixelgröße unabhängig vom Blickwinkel schon bei der Aufnahme, so dass die direkte Co-Registrierung unter Vernachlässigung der Effekte der Erdrotation ermöglicht wird.
Eine dritte erfindungsgemäße Möglichkeit ergibt sich durch Anwendung eines dynamischen (adaptierten) Binnings auf zeitlich variabel auftretende dynamische Verzerrungseffekte infolge der Erdrotation. Diese können durch ein dynamisch angepasstes Zusammenfassen von hinreichend kleinen Sensorelementen (Subpixeln) zu effektiven Sensorpixeln erreicht werden. Die zeitliche Variabilität ergibt sich aus der räumlichen Variation der Rotationskomponente, gesehen aus dem Orbit des Satelliten, der das Beobachtungsinstrument trägt.

Mit der erfindungsgemäßen Lösung ist es möglich, eine Bilddatenaufnahme bei der Beobachtung von Himmelskörpern durch satellitengestützte Instrumente für eine Bildanalyse nach Überlagerung der sukzessive von der Oberfläche des Himmelskörpers aufgenommene Objektpixel zu realisieren, die einen hohen Grad der Übereinstimmung der Co-Registrierung der Aufnahmen von gleichen, mittels unterschiedlicher Sensorpixel aufgenommener Objektpixel ohne digitale Bildnachbearbeitung erzielt. Damit wird die Aufnahme mehrerer verschiedener oder gleichartiger optischer Kanäle derart ermöglicht, dass die PSFs der optischen Kanäle (Co-Registrierung) in hohem Grade in Übereinstimmung gebracht werden, ohne dass eine digitale Bildnachbearbeitung erforderlich wird. Damit können die Probleme und Fehlerquellen eines nachträglichen Resamplings von vornherein ausgeschlossen werden.

Die Erfindung soll nachstehend anhand von Ausführungsbeispielen näher erläutert werden. Die Zeichnungen zeigen:
- Fig. 1:: eine Prinzipansicht der erfindungsgemäßen Zusammenfassung von Sensorelementen zu effektiven Sensorpixeln (Binning zur Kompensation statischer örtlicher Verzerrung der Objektabbildung),
- Fig. 2:: eine Prinzipdarstellung der räumlichen Verzerrung der optischen Abbildung infolge der gekrümmten Oberfläche eines Himmelskörpers beim Überfliegen mit einem Beobachtungsinstrument auf einer Umlaufbahn,
- Fig. 3:: eine Prinzipdarstellung des Pixelrasters der Sensorpixel zur Kompensation der statischen Verzerrung,
- Fig. 4:: ein Korrekturschema für die Kompensation der statischen Verzerrung der optischen Abbildung durch Einsatz einer entzerrenden Optik,
- Fig. 5:: eine Veranschaulichung der Missregistrierungseffekte bei 90°-Inklination der Orbitalebene des Satelliten zum Äquator und Berücksichtigung der Erdrotation beim Überfliegen des Äquators mit Darstellungen von zwei effektiven Pixeln mit unterschiedlicher spektraler Empfindlichkeit über dem Äquator a) zum Zeitpunkt t0 und b) zum Zeitpunkt t1 ohne Korrektur und c) zum Zeitpunkt t1 mit Korrektur,
- Fig. 6: eine Veranschaulichung des dynamischen Binnings für einen Sechserblock von spektral unterschiedlichen effektiven Pixeln beim Überfliegen des Äquators in nördlicher Richtung mit Darstellung der adaptierten Änderung der dynamischen Binning-Restriktionen je nach Breitengrad (d.h. je nach Rotationsgeschwindigkeit des beobachteten Bodenpunktes auf der Erdoberfläche).

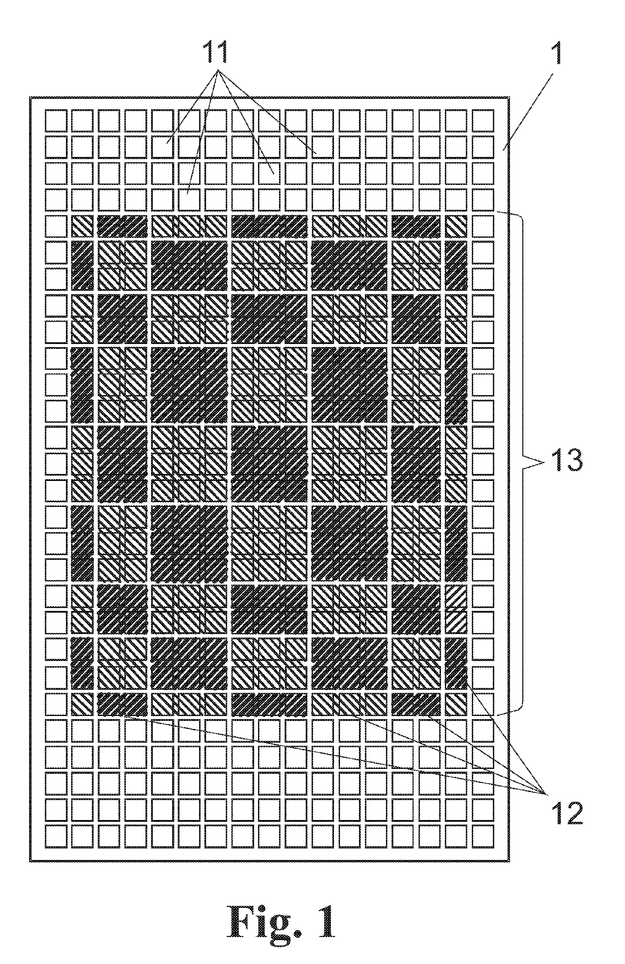

Das Verfahren gemäß der Erfindung macht von einem Zusammenfassen von benachbarten, hinreichend kleinen Sensorelementen 11 Gebrauch, um statische Abbildungsfehler (Verzerrungen) infolge der Oberflächenkrümmung eines beobachteten Himmelskörpers (z.B. eines Planeten, wie der Erde) gleich bei der Bildaufnahme zu kompensieren. Die Zusammenschaltung von Sensorelementen 11 eines hochauflösenden Sensorarrays 1 zu größeren Pixeln wird nachfolgend als "Binning" bezeichnet, wobei einzelne Sensorelemente 11 die Subpixel von den zur Verzerrungskorrektur zusammengefassten effektiven Sensorpixel 12 unter dem Gesichtspunkt der Schaffung von real und äquidistant abgetasteten Objektpixeln auf der Oberfläche 3 des beobachteten Himmelskörpers darstellen.
Eine räumliche Aufteilung der zusammengefassten effektiven Sensorpixel 12 zeigt Fig. 1. Dabei werden die Flächen der effektiven Sensorpixel 12 zum Rand des Gesichtsfeldes Sensorarrays 1 (sensor field of view) hin kleiner (d.h. gestaucht). Das kann zum einen durch unterschiedlich große Sensorbereiche als adaptierte Sensorhardware des Sensorarrays 1 realisiert werden, wie sie als größenadaptierte Pixelstruktur auf der Sensorfläche in Fig. 3 schematisch dargestellt ist.

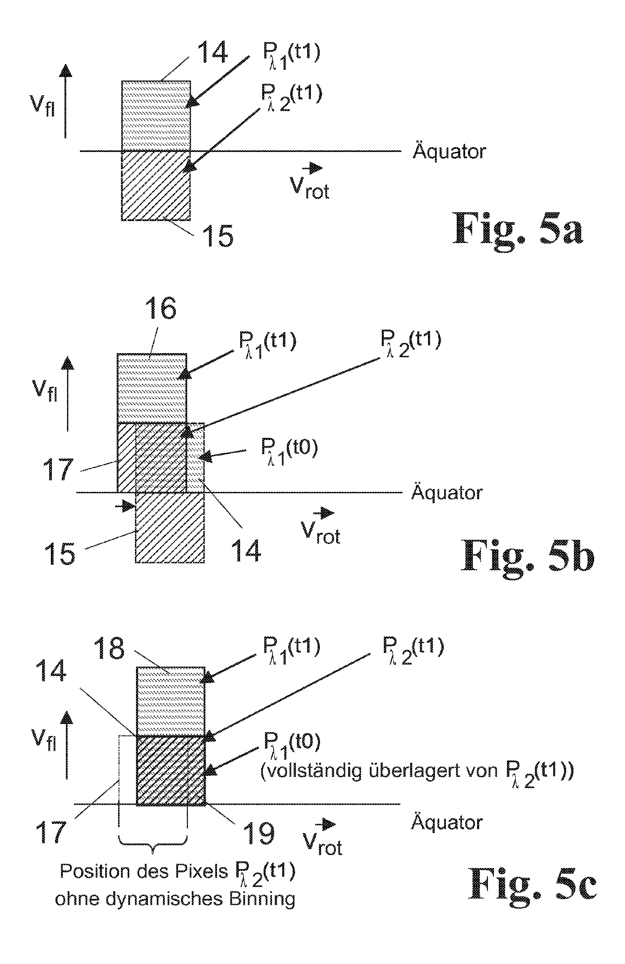

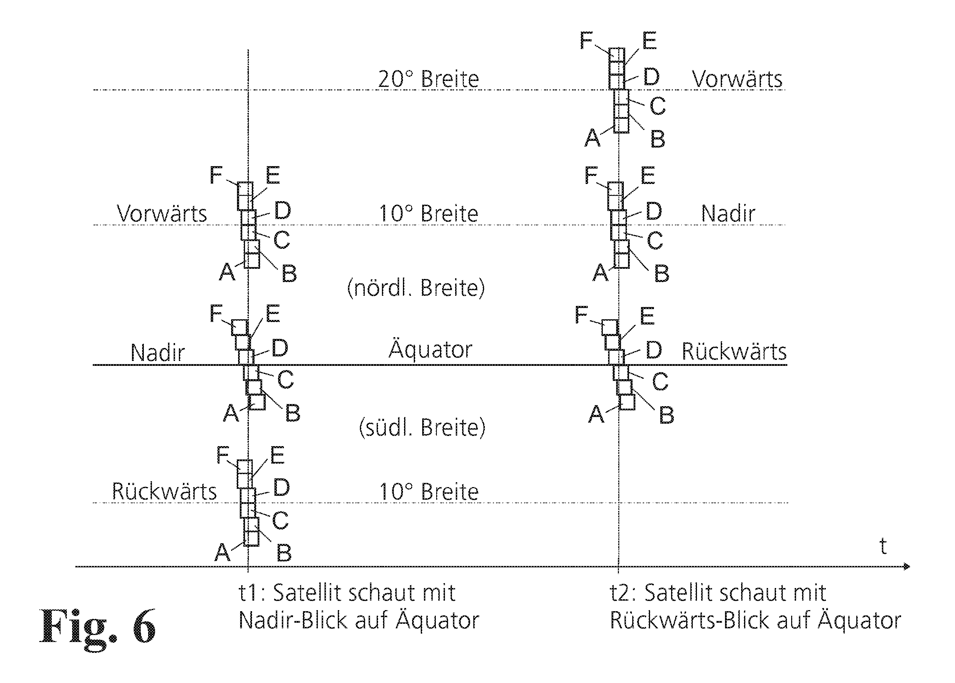

Für die vorliegende Erfindung wird vom an sich bekannten Binning in dem Sinne Gebrauch gemacht, dass möglichst kleine Sensorelemente 11 als Subpixel in adaptierten größeren effektiven Sensorpixeln 12 derart zusammengefasst werden, dass abbildungs- und bewegungskonform einheitliche Objektpixel auf der Oberfläche des Himmelskörpers auch bei unterschiedlichen Blickwinkeln (siehe Fig. 2) abgetastet werden, um damit die Punkt-Verwaschungs-Funktionen (PSFs) räumlich oder zeitlich auseinanderliegender Objektpixel bereits bei der Abtastung in Übereinstimmung zu bringen (direkte Co-Registrierung). Eine fehlerhafte Ausrichtung des Sensorarrays 1 kann somit durch entsprechende Berücksichtigung der Pixelgrößen und -lagen gemäß Fig. 1 sowie durch adaptives Binning zum Ausgleich überlagerter Bewegungen (Fluggeschwindigkeit V_{fl} und Rotationsgeschwindigkeit Vᵣₒₜ) gemäß Fig. 5a-c und Fig. 6 ausgeglichen werden.

Eine zweite Möglichkeit, die oben beschriebenen statischen Fehlereffekte bei der Co-Registrierung zu korrigieren, sind Anpassungen der Optik dergestalt, dass eine verzerrt abbildende Optik in Abhängigkeit vom Blickwinkel gerade die Verzerrung aufgrund des Abtastprinzips und der Form des Himmelskörpers aufhebt. Dies ist besonders vorteilhaft bei Pushbroom-Scannern, da sich hier durch Anpassung einer einzigen und in der Regel feststehenden Optik das gesamte Gesichtsfeld des optischen Instruments erfindungsgemäß korrigieren lässt. Der Zusammenhang zwischen den einzelnen Korrekturfunktionen ist in Fig. 4 schematisch skizziert. Die Korrekturen müssen dazu führen, dass die abbildende Optik die Objektpixel auf der gekrümmten Oberfläche des Himmelskörpers im Randbereich in analoger Weise zur Pixeldarstellung von Fig. 3 komprimiert.
In Fig. 4 sind die für die relative Größenänderung eines Objektpixels (auf der Oberfläche des Himmelskörpers) innerhalb der Abtastweite des Instruments (Schwadweite) relevanten Einflussfaktoren skizziert. Zum einen ist dies der Einfluss der Erdkrümmung der zu einer Vergrößerung der tatsächlichen Bodenpixel führt (effect introduced by earth curvature). Unabhängig davon führen die Verzerrungseigenschaften der eingesetzten Optik zu einer diesen Verzerrungseigenschaften entsprechenden relativen Größenänderung (effect introduced by optics distortion). Beide Effekte überlagern sich. Erfindungsgemäßes Ziel ist es, eine Aufhebung der Überlagerung beider Effekte herbeizuführen, so dass im Ergebnis keine relative Größenänderung innerhalb der Schwadweite auftritt (Sum of counteracting effects).

Eine dritte Möglichkeit ergibt sich durch Anwendung eines Binnings auf dynamische Verzerrungseffekte infolge der Rotation des beobachteten Himmelskörpers. Hier soll im Folgenden - ohne Beschränkung der Allgemeinheit - zur Vereinfachung von der Erdrotation gesprochen werden.
Die dynamischen Verzerrungseffekte können durch ein dynamisches Binning (angepasstes, zeitlich variierendes Zusammenfassen) von hinreichend kleinen Sensorelementen (Subpixeln) zu in Rotationsrichtung versetzten Anordnungen von effektiven Sensorpixeln erreicht werden. Die zeitliche Variabilität ergibt sich aus der räumlichen Variation der Rotationskomponente, wie in Fig. 6 dargestellt und betrachtet aus dem Orbit des Satelliten, der das Beobachtungsinstrument 2 (nur in Fig. 2 gezeichnet) trägt.
Grundsätzlich ergäbe sich dadurch die Möglichkeit, allein durch zeitlich variables Binning das Problem der Co-Registrierung vollständig zu lösen. In der Praxis sind jedoch die dahingehenden Möglichkeiten durch die endliche Größe der Subpixel (Sensorelemente) begrenzt.

Bei einem beispielhaft gewählten Orbit von 90°-Inklination (Satellit fliegt genau von Süden nach Norden über den Äquator) und einem Pushbroom-Scanner gibt es folgende Bewegungsvektoren:
Die Flugbewegung des Satelliten und damit eine projizierte Bewegung des abzubildenden Objektes über der Sensorebene. Die Geschwindigkeit V_{fl} dieser projizierten Bewegung kann in erster Näherung als konstant angenommen werden. Die maximal möglichen Integrationszeiten werden durch diese Geschwindigkeit vorgegeben.
Bei dem beispielhaft gewählten Orbit mit 90°-Inklination ist die projizierte Bewegung aufgrund der Erdrotation orthogonal zur Geschwindigkeit V_{fl} . Die Geschwindigkeit Vᵣₒₜ der projizierten Erdrotation ist nicht konstant, da die Oberflächengeschwindigkeit eines mit konstanter Winkelgeschwindigkeit rotierenden Himmelskörpers von dem Abstand der Oberfläche zur Rotationsachse abhängt. Am Äquator ist diese Geschwindigkeit am größten, in Polnähe am kleinsten.

Für eine fehlerfreie Co-Registrierung müssen beide Bewegungen berücksichtigt werden:
Die für einen Orbit nahezu konstante Flugbewegung mit der Geschwindigkeit v_{fl} wird durch die Wahl des Abtastzeitpunktes berücksichtigt, indem die Zeit zwischen zwei Abtastzeitpunkten beispielsweise so gewählt wird, das sich in dieser Zeit ein Satellitenpunkt um genau einen Pixel weiterbewegt hat (siehe Fig. 5a-c).
Die nicht konstante Bewegung mit der Geschwindigkeit Vᵣₒₜ wird durch ein dem Orbit angepasstes dynamisches Binning korrigiert, indem das effektive Objektpixel der zweiten Aufnahme, das mit einem effektiven Objektpixel einer vorhergehenden Aufnahme überlagert werden soll, entsprechend verschoben auf der Sensormatrix definiert wird. Der Betrag dieser Verschiebung ist abhängig von der Rotationsgeschwindigkeit Vᵣₒₜ des Oberflächenpunktes des Himmelskörpers und damit vom Breitengrad des beobachteten Gebietes.
Fig. 5a bis 5c erläutern das bis jetzt gesagte für ein effektives Pixel 12, das in Äquatornähe erfasst wurde. Zum Zeitpunkt t0 sollen zwei Pixel 14 und 15 mit unterschiedlicher spektraler Empfindlichkeit (unterschiedlicher zugeordneter Wellenlängenlängenbereich λ1 und λ2) aufgenommen worden sein.
Zum Zeitpunkt t1 (nach einer ersten Integrationszeit, der Satellit ist um die Länge eines effektiven Pixels 12 weitergeflogen) würde sich der Zustand gemäß Fig. 5b ergeben. Das effektive Pixel 14 der Wellenlänge λ1, das zum Zeitpunkt t0 aufgenommen wurde, ist infolge der Rotationsbewegung der Erde zu den effektiven Pixeln 16 und 17 der Wellenlängen λ1 und λ2 um den Bruchteil einer Pixellänge in östlicher Richtung vorangekommen, so dass das effektive Pixel 17 der Wellenlänge λ2 infolge der Flugbewegung des Satelliten (90°-Richtung zum Äquator und betragsmäßig eine Kantenlänge eines effektiven Pixels 12) zum eigentlichen Zweck der Co-Registrierung nicht optimal zur Deckung mit dem früher abgetasteten effektiven Pixel 14 der Wellenlänge λ1 kommt. Es kommt während des Zeitintervalls (t1-t0) zu einer Verschiebung der zu überlagernden effektiven Pixel 14 (der Wellenlängen λ1) und 15 (der Wellenlänge λ2) um beispielsweise 1/10 der Länge eines effektiven Sensorpixels 12, weil sich der Himmelskörper zwischen den zwei Sensoraufnahmen in den Zeitpunkten t0 und t1 unter dem Satelliten weggedreht hat.

Diese Bewegung (mit der am Äquator angenommenen Geschwindigkeit Vᵣₒₜ) wird erfindungsgemäß durch dynamisches Binning ausgeglichen, indem das effektive Sensorpixel 12 zur Aufnahme der Wellenlänge λ2 zum Zeitpunkt t1 um den entsprechenden Betrag auf dem Sensorarray 1 nach rechts verschoben definiert wird, wie es Fig. 5c zeigt.
Die Strecke, um die die effektiven Sensorpixel 12 dynamisch "verschoben" (d.h. lagemäßig umdefiniert) werden müssen, hängt von der Position des aufzunehmenden Gebietes ab, da die Bewegungsgeschwindigkeit Vᵣₒₜ des aufzunehmenden Gebietes von dessen Abstand zur Rotationsachse abhängt. Folglich ist die zu verschiebende Strecke am Äquator am größten und in Pol-Nähe am kleinsten.

Werden Aufnahmen bei in Flugrichtung variierenden Blickwinkeln benötigt (und somit ein sehr großes Gesichtsfeld in Flugrichtung abgetastet), so werden mit einer einzigen Sensorabtastung (Frame) verschiedene Breitengrade gleichzeitig aufgenommen. Soll dieser Abtastung eine nachfolgende Abtastung überlagert werden, die später (mit in Flugrichtung überlappenden Frames) aufgenommen wurde, müssen die effektiven Sensorpixel 12 wie oben beschrieben verschoben werden. Da der Grad der Verschiebung vom überflogenen Breitengrad abhängt, ist die notwendige Verschiebung für den gesamten Frame nicht konstant. Das ist in den Abbildungen in Fig. 6 illustriert, bei denen sechs verschiedene Pixel überlagert werden sollen, die mit A-F nummeriert sind.

Das beobachtende Instrument 2 hat in diesem Beispiel eine sehr große Abtastweite in Flugrichtung, die 20 Breitengraden entspricht. Es werden drei Ansichten (Views) aufgenommen: Vorwärts, Nadir und Rückwärts.
Mit dem ersten Bild, das einer ersten Wellenlänge λ1 entspricht, werden die mit A gekennzeichneten Pixel aufgenommen. Mit dem zweiten Bild, das einer anderen Wellenlänge λ2 entspricht und das nach einer Zeit t1 aufgenommen wird, in der der Satellit bezüglich der abgebildeten Szene um ein Pixel weitergeflogen ist, werden die mit B gekennzeichneten Pixel aufgenommen. Mit dem dritten Bild werden die mit C gekennzeichneten Pixel aufgenommen usw. Alle einem Breitengrad zugeordneten sechs Pixel sollen nacheinander ein- und dasselbe Objektpixel abbilden und somit zu einer fehlerfreien Überlagerung des führen. Die aufgrund der Erdrotation notwendige Verschiebung der effektiven Sensorpixel 12 ist für unterschiedliche Breitengrade unterschiedlich.
Wegen der endlichen Anzahl der für ein effektives Sensorpixel 12 zur Verfügung stehenden Sensorelemente kommt es zu einer Stufung der notwendigen Verschiebung, wie in Fig. 6 gezeigt.

Da bei bekanntem Orbit zu jedem Zeitpunkt bekannt ist, welches Pixel welchen Breitengrad abbildet, kann die notwendige Verschiebung der effektiven Sensorpixel 12 berechnet werden.
Die Steuerung der Verschiebung der effektiven Pixel kann durch eine Hardwaresteuerung, wie einen endlichen Automaten erfolgen, der in digitaler Logik implementiert ist (siehe z.B. Carsten Gremzow: High-Level-Synthese aus flachen Kontroll-/Datenflussgraphen, Dissertation der Fakultät IV - Elektrotechnik und Informatik der Technischen Universität Berlin, Berlin 2004).
Weiterhin ist es möglich, die notwendigen Daten vorher zu berechnen und in einem Speicher zu hinterlegen. Nach Auslesen dieses Speichers und gesteuert durch den Speicherinhalt kann dann eine entsprechende Verschiebung durchgeführt werden. Eine weitere Möglichkeit besteht in der Berechnung der Verschiebungskoordinaten in Echtzeit.
Natürlich können auch Kombinationen der oben beschriebenen Möglichkeiten sinnvoll sein. So kann beispielsweise ein Teil der Verschiebungsparameter vorberechnet im Speicher hinterlegt sein und ein anderer Teil in Echtzeit berechnet werden oder es können einige Parameter durch einen endlichen Automaten gesteuert werden, während ein anderer Teil durch einen Prozessor variabler berechnet wird, auf dem eine Software läuft.

Neben dem beispielhaft beschriebenen Orbit mit 90°-Inklination kann selbstverständlich auch bei einem Orbit mit einer anderen Inklination ein dynamisches Binning von Vorteil sein, die Verschiebungen der effektiven Pixel müssen dann entsprechend in Flugrichtung und quer zur Flugrichtung erfolgen.
Die Pixelverschiebung in Flugrichtung kann erfindungsgemäß ebenfalls durch eine dynamische Anpassung des Abtast-Zeitpunktes erfolgen, da die projizierte Bewegung aufgrund der Satellitenbewegung sich mit der projizierten Bewegung aufgrund der Rotation des zu beobachtenden Himmelskörpers teilweise überlagert und damit die resultierende Geschwindigkeit nicht mehr konstant ist.

Abschließend sei noch auf die Vorteile verwiesen, die sich durch die gemäß der Erfindung bereits bei der Bildaufnahme möglichst hohe Güte der Überlagerung (Co-Registrierung) von mehreren optischen Kanälen ergeben:
1. Werden Daten unterschiedlicher optischer Kanäle mit einem hohen Grad an Co-Registrierung zusammengefasst (z.B.: verschiedene Spektralkanäle, verschiedene Polarisationskanäle), so wird die Generierung abgeleiteter Fernerkundungsprodukte ohne vorheriges verlustbehaftestes Resampling auf ein einheitliches und damit perfekt co-registriertes Gitter ermöglicht. Damit steigt die Qualität dieser Fernerkundungsprodukte. Im technischen Sinne sinkt die MTF (Modulations-Transfer-Funktion) der abgeleiteten Fernerkundungsprodukte nicht gegenüber der der Rohdaten ab.
2. Ähnliche Vorteile stellen sich bei Zusammenfassung gleichartiger optischer Kanäle mit einem hohen Grad an Co-Registrierung (z.B.: TDI - Time Delay Integration) ein. Eine mangelhafte Co-Registrierung würde hier (TDI) zu einer direkten Verschlechterung der MTF der zusammengefassten Bildaufnahme führen. Somit steigt auch hier die Qualität der gewonnenen Bilddatensätze.

### Bezugszeichenliste

- 1: Sensorarray
- 11: Sensorelemente (Subpixel der effektiven Sensorpixel)
- 12: effektive Sensorpixel (aus zusammengefassten Sensorelementen)
- 13: Beobachtungsfeld
- 14: effektives Sensorpixel einer ersten Wellenlänge λ1 zum Zeitpunkt t0
- 15: effektives Sensorpixel einer zweiten Wellenlänge λ2 zum Zeitpunkt t0
- 16: effektives Sensorpixel der Wellenlänge λ1 bei t1 ohne dynamisches Binning
- 17: effektives Sensorpixel der Wellenlänge λ2 bei t1 ohne dynamisches Binning
- 18: effektives Sensorpixel der Wellenlänge λ1 bei t1 mit dynamischem Binning
- 19: effektives Sensorpixel der Wellenlänge λ2 bei t1 mit dynamischem Binning

- 2: Beobachtungsinstrument
- 21: Blickwinkel

- 3: (gekrümmte) Erdoberfläche
- 31: gleich großer Abstand der Zielpixel (auf der Oberfläche des Himmelskörpers)

## Patentansprüche

1. Verfahren zur Bilddatenaufnahme bei der Beobachtung von Himmelskörpern durch satellitengestützte Instrumente, bei dem ein Bildsensor eine Vielzahl von Bildpunkten (Objektpixeln) aus einem zweidimensionalen Abtastbereiches beim Überfliegen der Oberfläche des Himmelskörpers aufnimmt und durch wiederholte Abtastung derselben Objektpixel, die durch die Flugbewegung sukzessive auf verschiedenen Sensorelementen zu liegen kommen, eine Bildanalyse nach Überlagerung unterschiedlicher Pixeldaten für gleiche von der Oberfläche des Himmelskörpers aufgenommene Objektpixel ermöglicht,
**dadurch gekennzeichnet, dass**
Abbildungsverzerrungen infolge der Oberflächenkrümmung, der Rotationsbewegung des Himmelskörpers oder der Flugbewegung des beobachtenden Instruments bereits im Prozess der Bildaufnahme minimiert werden.

2. Verfahren nach Anspruch 1 **dadurch gekennzeichnet, dass**
eine statische Abbildungsverzerrung aufgrund der gekrümmten Oberfläche des beobachteten Himmelskörpers durch eine von der Mitte zum Randbereich des auf den Bildsensor projizierten Abtastbereiches hin verkleinerte Pixelfläche der Sensorpixel mit radial gestauchter Pixelfläche korrigiert wird.

3. Verfahren nach Anspruch 2 **dadurch gekennzeichnet, dass**
die Bilddaten mittels eines Bildsensors, der von der Mitte zum Randbereich hin abnehmende sensitive Flächengrößen der Sensorelemente aufweist, aufgenommen werden.

4. Verfahren nach Anspruch 2, **dadurch gekennzeichnet, dass**
die Bilddaten mittels eines hochauflösenden Bildsensors, der gleichgroße sensitive Flächen der Sensorelemente aufweist, derart aufgenommen werden, dass die Sensorelemente zu unterschiedlich großen effektiven Sensorpixeln zusammengefasst werden, wobei zur Erzeugung der effektiven Sensorpixel von der Mitte zum Randbereich des Bildsensors hin weniger Sensorelemente zusammengefasst werden.

5. Verfahren nach Anspruch 4, **dadurch gekennzeichnet, dass**
die effektiven Sensorpixel als unterschiedlich große Sensorelementbereiche durch hardwaregestütztes Zusammenfassen von benachbarten Sensorelementen gebildet werden, wobei die Korrektur einer statischen Abbildungsverzerrung aufgrund der gekrümmten Oberfläche des beobachteten Himmelskörpers durch Zusammenschaltung der Signalausgänge einer geringeren Anzahl von Sensorelementen im Randbereich des auf den Bildsensor projizierten Abtastbereiches gegenüber der Anzahl von Sensorelementen in der Mitte des Bildsensors zu kleineren effektiven Sensorpixeln mit radial gestauchter Pixelfläche erreicht wird.

6. Verfahren nach Anspruch 4, **dadurch gekennzeichnet, dass**
die effektiven Sensorpixel als unterschiedlich große Sensorelementbereiche durch softwaregestütztes Zusammenfassen von benachbarten Sensorelementen gebildet werden, wobei die Korrektur einer statischen Abbildungsverzerrung aufgrund der gekrümmten Oberfläche des beobachteten Himmelskörpers durch Zusammenfassen der Signaldaten einer geringeren Anzahl von Sensorelementen im Randbereich des auf den Bildsensor projizierten Abtastbereiches gegenüber der Anzahl von Sensorelementen in der Mitte des Bildsensors zu kleineren effektiven Sensorpixeln mit radial gestauchter Pixelfläche erreicht wird.

7. Verfahren nach Anspruch 1, **dadurch gekennzeichnet, dass**
eine statische Abbildungsverzerrung aufgrund der gekrümmten Oberfläche des beobachteten Himmelskörpers durch optische Entzerrung mittels einer Optik mit entgegengesetzt zur Objektfeldkrümmung verzerrter Abbildung korrigiert wird, wobei der Bildsensor gleichgroße metrische Sensorelemente aufweist.

8. Verfahren nach einem der Ansprüche 1, **dadurch gekennzeichnet, dass**
zusätzlich zu einer auf beliebige Art korrigierten statischen Abbildungsverzerrung eine Korrektur von dynamischen Abbildungsverzerrungen aufgrund der Bewegung des Beobachtungsinstruments gegenüber der Oberfläche des um seine Achse rotierenden Himmelskörpers durch softwaregestütztes zeitlich veränderliches Zusammenfassen von Sensorelementen zu effektiven Sensorpixeln derart erfolgt, dass die unterschiedlich zusammengefassten Sensorelemente der effektiven Sensorpixel im Laufe der wiederholten Abtastung des auf den Bildsensor projizierten Abtastfeldes dynamisch entsprechend der Abbildungsbewegung in ihrer Position auf dem Bildsensor verschoben werden.

9. Verfahren nach einem der Ansprüche 1, **dadurch gekennzeichnet, dass**
zusätzlich zu einer auf beliebige Art korrigierten statischen Abbildungsverzerrung eine Korrektur von dynamischen Abbildungsverzerrungen aufgrund der Bewegung des Beobachtungsinstruments gegenüber der Oberfläche des um seine Achse rotierenden Himmelskörpers durch hardwaregestütztes zeitlich veränderliches Zusammenfassen von Sensorelementen zu effektiven Sensorpixeln derart erfolgt, dass die unterschiedlich zusammengefassten Sensorelemente der effektiven Sensorpixel im Laufe der wiederholten Abtastung des auf den Bildsensor projizierten Abtastfeldes dynamisch entsprechend der Abbildungsbewegung in ihrer Position auf dem Bildsensor verschoben werden.

10. Verfahren nach Anspruch 8 oder 9, **dadurch gekennzeichnet, dass**
dynamische Verzerrungseffekte infolge einer der Flugbewegung überlagerten Rotationsbewegung des um seine Achse rotierenden Himmelskörpers durch zeitlich veränderliches Zusammenfassen der effektiven Sensorpixel berücksichtigt werden, wobei das zeitlich veränderliche Zusammenfassen von benachbarten Sensorelementen in Abhängigkeit vom Abstand des Beobachtungsfeldes auf der Oberfläche des Himmelskörpers zur Drehachse desselben erfolgt.

11. Verfahren nach Anspruch 8 oder 9, **dadurch gekennzeichnet, dass**
dynamische Verzerrungseffekte infolge der Flugbewegung des Beobachtungsinstruments über der Oberfläche des Himmelskörpers durch eine zeitlich variable Abtastrate der effektiven Sensorpixel berücksichtigt werden, wobei die zeitlich veränderliche Abtastrate in Abhängigkeit vom Abstand des Beobachtungsfeldes des Himmelskörpers zur Drehachse desselben erfolgt.

12. Verfahren nach einem der Ansprüche 8 oder 9, **dadurch gekennzeichnet, dass**
sowohl die Korrektur der statischen Abbildungsverzerrung aufgrund der gekrümmten Oberfläche als auch der dynamischen Abbildungsverzerrungen aufgrund der Bewegung des Beobachtungsinstruments gegenüber der Oberfläche des um seine Achse rotierenden Himmelskörpers durch zeitlich veränderliches Zusammenfassen von Sensorelementen zu effektiven Sensorpixeln erfolgen, wobei die unterschiedlich zusammengefassten Sensorelemente der effektiven Sensorpixel im Laufe der wiederholten Abtastung des auf den Bildsensor projizierten Abtastfeldes dynamisch entsprechend der Abbildungsbewegung in ihrer Position auf dem Bildsensor verschoben werden.

13. Verfahren nach Anspruch 12, **dadurch gekennzeichnet, dass**
eine zusätzliche Korrektur der dynamischen Abbildungsverzerrungen aufgrund der Flugbewegung des Beobachtungsinstruments gegenüber der Oberfläche des Himmelskörpers durch eine zeitlich variable Abtastrate der effektiven Sensorpixel erfolgt, wobei die zeitlich veränderliche Abtastrate in Abhängigkeit vom Abstand des Beobachtungsfeldes des Himmelskörpers zur Drehachse desselben erfolgt.

14. Verwendung des Verfahrens nach einem der Ansprüche 1 bis 13 zur Bildaufnahme spektral oder polarisationsoptisch unterschiedlicher optischer Kanäle von satellitengestützten Instrumenten bei der Beobachtung von Himmelskörpern, wobei der Bildsensor eine Vielzahl von Objektpunkten aus einem zweidimensionalen Abtastfeld der Oberfläche des Himmelskörpers durch wiederholte Abtastung derselben Objektpunkte infolge der Flugbewegung sukzessive mit Sensorelementen von verschiedenen optischen Kanälen aufnimmt und ohne weitere Korrektur eine Überlagerung der Bilddaten unterschiedlicher optischer Kanäle zur mehrkanaligen Bildanalyse ermöglicht.

15. Verwendung des Verfahrens nach einem der Ansprüche 1 bis 13 zur Bildaufnahme gleichartiger optischer Kanäle von satellitengestützten Instrumenten bei der Beobachtung von Himmelskörpern, wobei der Bildsensor eine Vielzahl von Objektpunkten aus einem zweidimensionalen Abtastfeld der Oberfläche des Himmelskörpers durch wiederholte Abtastung derselben Objektpunkte infolge der Flugbewegung sukzessive mit Sensorelementen von gleichartigen optischen Kanälen aufnimmt und ohne weitere Korrektur eine Überlagerung der Bilddaten zur Bilddatenverbesserung nach dem TDI-Verfahren ermöglicht.
